(19) Europäisches Patentamt
European Patent Office
Office européen des brevets

(11) Veröffentlichungsnummer: **0 255 629**
**B1**

# (12) EUROPÄISCHE PATENTSCHRIFT

(45) Veröffentlichungstag der Patentschrift: **08.11.89**

(51) Int. Cl.⁴: **C02F 1/66**, C02F 1/52, C01F 11/12

(21) Anmeldenummer: **87110274.5**

(22) Anmeldetag: **16.07.87**

## (54) Verfahren zur Aufarbeitung von wässrigen Kieselfluorwasserstoffsäurelösungen.

(30) Priorität: **05.08.86 DE 3626448**

(43) Veröffentlichungstag der Anmeldung: **10.02.88 Patentblatt 88/6**

(45) Bekanntmachung des Hinweises auf die Patenterteilung: **08.11.89 Patentblatt 89/45**

(84) Benannte Vertragsstaaten: **BE DE ES FR GB IT NL SE**

(56) Entgegenhaltungen:
**US-A- 2 780 521**

**CHEMICAL ABSTRACTS, Band 53, Nr. 11, 10. Juni 1959, Spalte 10680g, Columbus, Ohio, US; & IL-11 515 (FERTILIZERS & CHEMICALS LTD) 21-12-1958**

(73) Patentinhaber: **HOECHST AKTIENGESELLSCHAFT, Postfach 80 03 20, D-6230 Frankfurt am Main 80(DE)**

(72) Erfinder: **Schimmel, Günther, Dr., Ehrenstrasse 16, D-5042 Erftstadt(DE)**

EP 0 255 629 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vorliegende Erfindung betrifft ein Verfahren zur Aufarbeitung von wäßrigen Lösungen von Hexafluorokieselsäure, indem man diese Lösungen mit einer Calciumverbindung vermischt und umsetzt und das Reaktionsprodukt filtriert.

$H_2SiF_6$-haltige wäßrige Lösungen entstehen z.B. dort, wo HF bzw. $SiF_4$-haltige Abgase mit Wasser ausgewaschen werden. Insbesondere findet dieser Prozeß in Phosphorsäureanlagen statt, in denen Apatit- und $SiO_2$-haltiges Rohphosphat mit einer Mineralsäure, insbesondere Schwefelsäure, aufgeschlossen wird.

Die Konzentration der $H_2SiF_6$ kann dabei in einen Bereich von 2 - 25 % eingestellt werden, indem das Waschwasser mehr oder weniger häufig recycliert wird. Allerdings steigen mit größerer Konzentration die apparativen Anforderungen an den Gaswäscher, um noch einen ausreichend niedrigen F-Gehalt im Abgas sicherzustellen.

Die $H_2SiF_6$-Lösung kann aufgrund der Stöchiometrie folgender Gleichungen:

$$SiF_4 + 2\ HF \rightleftharpoons H_2SiF_6$$

$$3\ SiF_4 + 2\ H_2O \longrightarrow 2\ H_2SiF_6 + SiO_2$$

freies HF bzw. $SiO_2$ enthalten. Ebenso können Spuren von mitgerissenen Phsophorsäuretröpfchen darin enthalten sein.

Die anfallenden Hexafluorokieselsäure-Lösungen dürfen wegen ihrer Acidität sowie ihres Fluor-Gehalts nicht direkt ins Abwasser geleitet werden. Es bieten sich zwei Möglichkeiten ihrer Aufarbeitung an:

1. Man versucht, die F- bzw. $SiO_2$-Werte dieser Lösungen zu nutzen. In einer Reihe von Druckschriften, z.B. DE-A-22 48 149, DE-C-24 07 238, DE-A-23 07 897 werden Verfahren zur Gewinnung von $AlF_3$, HF, $CaF_2$ oder $SiO_2$ beschrieben.
2. Falls die Aufarbeitung auf ein Wertprodukt nicht lohnend ist, muß die $H_2SiF_6$ in ökologisch unbedenkliche Produkte überführt werden.

Hierzu bietet sich insbesondere die Umsetzung mit Calciumverbindungen an, wobei in Abhängigkeit von der Stöchiometrie, der Temperatur und dem pH-Wert verschiedene Reaktionen gemäß folgender Gleichungen möglich sind:

$$H_2SiF_6 + CaCO_3 \longrightarrow CaSiF_6 + H_2O + CO_2 \quad (1)$$

$$H_2SiF_6 + 3\ CaCO_3 \longrightarrow 3\ CaF_2 + SiO_2 + H_2O + 3\ CO_2 \quad (2)$$

$$H_2SiF_6 + 3\ Ca(OH)_2 \longrightarrow 3\ CaF_2 + SiO_2 + 4\ H_2O \quad (3)$$

Nach Gleichung (1) wird die $H_2SiF_6$ nur neutralisiert, wobei wegen der hohen Löslichkeit des $CaSiF_6$ ein hoher F-Gehalt in der Lösung resultiert. Nach Gleichung (2) läßt sich eine vollständige Umsetzung zu $CaF_2$ und $SiO_2$ erzielen. Hierzu müssen jedoch in der Regel etwas mehr als 3 Mol $Ca^{2+}$ eingesetzt werden (vgl. EP-B-39 324). Ferner ist diese Umsetzung in zweierlei Hinsicht problematisch:

1. Bei einem stöchiometrischen Unterschuß von $CaCO_3$ oder Temperaturen unter 40°C (vgl. DE-A-2 307 897 sowie die nachfolgenden Beispiele 1 und 2) bleibt das $SiO_2$ in Lösung und stört die Abtrennung des $CaF_2$ durch Sol- oder Gelbildung beträchtlich.
2. Die Reaktion (2) besitzt im Gegensatz zu Reaktion (3) eine positive Reaktionsenthalpie, ist also endotherm. Weist nun die aus dem Prozeß kommende $H_2SiF_6$ eine Temperatur von ≤ 50°C auf, so tritt bei der Neutralisation mit $CaCO_3$ eine Abkühlung der Maische mit der Konsequenz ein, daß entweder die oben genannte $SiO_2$-Gelbildung auftritt oder aber zumindest die Filtrierbarkeit der Maische sich beträchtlich verschlechtert. Hier zeigt sich, wie wichtig unterstützende Maßnahmen zur Verbesserung der Filtrierbarkeit sind.

Insgesamt käme eine Umsetzung nach Gleichung (3) dem Ziel einer vollständigen Umsetzung sowie einer guten Filtrierbarkeit der bei der Umsetzung entstehenden Maische am nächsten. Nachteilig sind jedoch die dabei entstehenden Filterkuchen, welche sehr hohen Wassergehalt und somit relativ hohe Gewichte und Volumina aufweisen. Ferner ist $Ca(OH)_2$ das teuerste Produkt der Veredlungskette

$$CaCO_3 \longrightarrow CaO \longrightarrow Ca(OH)_2$$

Aufgabe war es nun, eine Arbeitsweise zu finden, welche die Nachteile der bekannten Verfahren nicht besitzt und die folgenden Bedingungen erfüllt:

1. Die Kalkmenge bezogen auf $H_2SiF_6$ soll möglichst klein sein.
2. Es soll eine möglichst preiswerte Ca-Chemikalie einsetzbar sein.
3. Die $H_2SiF_6$/Kalk-Maische soll gut rührbar sein und nicht im Reaktionsbehälter sedimentieren.
4. Die Filtrationsleistung bei der Abtrennung von $CaF_2/SiO_2$ soll sehr hoch sein.
5. Die relative Filterkuchenmenge soll möglichst gering sein und der Kuchen soll wenig Wasser enthalten.
6. Der Filterkuchen soll nicht thixotrop sondern möglichst krümelig sein.
7. Der $SiO_2$- und insbesondere F-Gehalt im Abwasser, also im Filtrat soll niedrig, möglichst unter 200 ppm sein.
8. Es soll die Gefahr von Kieselsol-Bildung ausgeschlossen sein.

Überraschenderweise wurde nun gefunden, daß sich diese Aufgabe durch eine bestimmte Kombination von Maßnahmen lösen läßt, die darin bestehen, daß man

a) Lösungen einsetzt, die einen Gehalt an $H_2SiF_6$ von 2 bis 15 Gew% aufweisen;
b) als Calciumverbindung $CaCo_3$ oder $Ca(OH)_2$ oder ein Gemisch aus $CaCO_3$ einerseits und CaO oder $Ca(OH)_2$ andererseits mit einem Anteil an CaO oder $Ca(OH)_2$ von mindestens 2 Gew% verwendet, wobei - wenn kein Gemisch eingesetzt wird - mindestens 70 % der Calciumverbindung in einer Korngröße von mehr als 8 µm, doch höchstens 15% in einer Korngröße von mehr als 2 mm vorliegen;
c) die Mengen der Calciumverbindung so bemißt, daß das Molverhältnis von $Ca^{2+}$ : $SiF_6^{2-}$ zwischen 2,8 und 3,5 liegt;
d) die Umsetzung bei einer Temperatur von mehr als 50°C durchführt und man
e) nach einer Verweilzeit von 0,5 bis 2,5 Stunden das Reaktionsprodukt filtriert.

Besonders vorteilhafte Ausgestaltungen der erfindungsgemäßen Arbeitsweise bestehen darin, daß man Lösungen einsetzt, die einen Gehalt von $H_2SiF_6$ von 6-10 Gew% aufweisen, daß man die Mengen an Calciumverbindung so bemißt, daß das Molverhältnis $Ca^{2+}$ : $SiF_6^{2-}$ 3,0 bis 3,45 beträgt und daß man die Umsetzung bei einer Temperatur zwischen 50 und 80°C durchführt.

Wie schon eingangs erwähnt, kann eine aus der Abgaswaschung von Phosphorsäureanlagen stammende $H_2SiF_6$-Lösung in ihrer Konzentration bis ca. 25 Gew% beliebig eingestellt werden. Allerdings nimmt mit zunehmender Konzentration der Aufwand für die Gaswäsche zu. Es wurde nun gefunden, daß sich die Umsetzung mit der Calciumverbindung sowie die anschließende Abtrennung eines praktisch fluorfreien Filtrates nur bis zu einer Konzentration von max. 15 Gew% $H_2SiF_6$ technisch durchführen läßt (vgl. das nachfolgende Beispiel 8). Bei höheren Konzentrationen ist a) die entstehende Maische nicht mehr rührfähig und b) die Umsetzung so schlecht, daß daraus ein viel zu hoher F-Gehalt im Filtrat resultiert. Eine $H_2SiF_6$-Konzentration von 6-10 Gew% liefert die insgesamt besten Ergebnisse.

Bei der Wahl der Ca-Komponente ist der Einsatz von reinem $CaCO_3$ nicht ganz unproblematisch, wie bereits erläutert wurde. Mit Kalkhydrat $Ca(OH)_2$ erhält man insgesamt gute Ergebnisse. Interessanterweise wurde darüberhinaus gefunden, daß die Korngröße sowohl von $CaCO_3$ als auch von $Ca(OH)_2$ eine entscheidende Rolle spielen. Die handelsüblichen Weißkalkhydrate weisen eine sehr geringe Korngröße auf und führen bei der Umsetzung zu nicht voll befriedigenden Ergebnissen. Dagegen bietet der Einsatz von Kalkhydraten mit mehr als 70 % Anteil einer Korngröße von mehr als 8 µm (ermittelt auf "Microtrac particle size Analyzer") eine Reihe von Vorteilen:

a) Die Leistung bei der Filtration der gebildeten $CaF_2/SiO_2$-Maische ist vergleichsweise höher.
b) Der Wassergehalt des erhaltenen Filterkuchens ist niedriger, was dessen Abfallmenge insgesamt verringert.
c) Der F-Gehalt im resultierenden Filtrat ist bei gleichem molarem Ca-Einsatz geringer.

Solche Kalkhydrate entstehen z.B. beim Trockenlöschen von $CaC_2$ oder auch als Nebenprodukte in der Kalkindustrie, wodurch sie evtl. einen gewissen Anteil an ungebranntem $CaCO_3$ enthalten können.

Ähnlich positive Ergebnisse wie mit den genannten Kalkhydraten können bei der Umsetzung von $H_2SiF_6$ mit gemahlenem Kalkstein ($CaCO_3$) erhalten werden, wenn folgende Bedingungen eingehalten sind:

a) Einhaltung der geforderten Kornverteilung, d.h. mehr als 70 % größer als 8 µm.
b) Die Temperatur der in den Reaktor einfließenden $H_2SiF_6$ muß größer als 50°C sein, um trotz der endothermen Umsetzung eine gut filtrierbare, kieselgelfreie Maische zu erhalten.

c) Das $Ca^{2+}$: $SiF_6^{2-}$ Verhältnis sollte größer als 3 : 1 sein.

Besonders vorteilhaft ist es, wenn man dem $CaCO_3$-Mehl einen Anteil von CaO oder $Ca(OH)_2$ zumischt, woraus sich drei positive Effekte zusätzlich ergeben; zum einen sorgt die zusätzliche Reaktionsenthalpie für eine Erwärmung der entstehenden Maische, zum zweiten weist der $CaF_2/SiO_2$-Filterkuchen eine insgesamt festere, krümelige Konsistenz auf und läßt sich besser vom Filtertuch ablösen; drittens ist man dann von der Kornfeinheit des $CaCO_3$ unabhängig. Weiterhin steigt die Filtrationsleistung deutlich an, wo bei nicht mit der Gefahr der Verstopfung des Filtertuchs durch Kieselsol oder feinste Feststoffpartikel zu rechnen ist.

Die Mischung läßt sich auch durch getrennte Dosierung beider Stoffe erzielen. Dies kann sowohl derart geschehen, daß beide Ca-Komponenten in einen einzigen Reaktionsbehälter geführt werden, als auch durch eine zweistufige Dosierung in eine Rührkesselkaskade, wobei in der ersten Stufe $CaCO_3$, in der zweiten $Ca(OH)_2$ bzw. CaO eingebracht werden.

Eine Verweilzeit von 0,5 - 2 Stunden nach dem Vermischen der Ausgangskomponenten ist anzustreben, da sowohl kürzere als auch längere Zeiten höhere lösliche Fluorid-Gehalte zur Folge haben.

In den nachfolgenden Beispielen soll der Erfindungsgegenstand näher beschrieben werden, ohne die Erfindung darauf einzuengen.

Beispiele 1 - 7

In einem beheizbaren, gerührten Edelstahlbehälter mit Überlauf (Volumen = 1 l) werden stündlich ca. 500 ml $H_2SiF_6$ (6 Gew%) über eine Dosierpumpe eingebracht sowie gleichzeitig über eine Dosierschnecke die entsprechende Menge der pulverförmigen Ca-Verbindung. Die entstehende Maische wird durch äußere Beheizung auf 70°C gehalten. Der Überlauf von 4 Stunden wird verworfen, danach wird die überfließende Maische 2 Stunden lang gesammelt, bei 70°C gehalten und anschließend über ein beheiztes Druckfilter (3 bar) mit 125 $cm^2$ Filterfläche abfiltriert. Es wird die Filtrationszeit gemessen, Filtrat- und Kuchengewicht ermittelt sowie der Feuchtegehalt des Kuchens und der F- sowie $SiO_2$-Gehalt des Filtrats bestimmt.

In Tabelle 1 sind die Versuchsparameter sowie Ergebnisse zusammengestellt. Tabelle 2 enthält die Kalkdaten.

Beispiel 8 und 9

In Abänderung von Beispiel 6 werden $H_2SiF_6$-Einsatzsäuren mit einer Konzentration von 18 bzw. 9 Gew% eingesetzt. Im Falle der 18%igen Säure ist die Mischung von breiiger Konsistenz und kaum fließfähig.

Beispiel 10 - 14

Im Gegensatz zu Beispiel 1 - 9 wird die Umsetzung in einem beheizten Behälter von 40 l Volumen unter kontinuierlicher Dosierung der Ausgangsstoffe durchgeführt. Die Maische fließt in einen beheizten Rührbehälter von 200 l Volumen über, wo sie angesammelt wird. Nach Durchsatz von ca. 180 l $H_2SiF_6$ wird die Maische einem Vakuum-Drehfilter mit ablaufendem Tuch, Filterfläche 0,25 $m^2$, zugeführt. Das Filtrat wird gesammelt der Kuchen kontinuierlich abgenommen und ebenfalls gesammelt.

Beispiel 15

Es wurde der gleiche Versuch wie in Beispiel 10 durchgeführt, der wieder zu einer völlig ungenügenden Filtration führte. Der gesamten Maische wurden jetzt 1,5 kg $Ca(OH)_2$ (A) auf einmal zugesetzt. Nach 1 Stunde Rührzeit bei 70°C wurde erneut über das Drehfilter abfiltriert. Die Filtration war sehr gut (> 1,3 $m^3/m^2h$), der F-Gehalt im Filtrat betrug 30 ppm, der $H_2O$-Gehalt im Filterkuchen 43 %. Dieses Beispiel zeigt, daß ein erfindungsgemäßes Kalkgemisch auch durch nachträgliches Dosieren einer Komponente hergestellt werden kann.

Tabelle 1

Neutralisation von $H_2SiF_6$ (6 Gew.-%) mit Ca-Chemikalien

| Beispiel | $H_2SiF_6$ (kg/h) | Ca-Quelle | $Ca:H_2SiF_6$ (molar) | Filtrat ppm F | Filtrat ppm $SiO_2$ | Filterkuchen % $H_2O$ | Filterkuchen Menge in %/$H_2SiF_6$ | Filtrationsleistung ($m^3/m^2h$) | Bemerkungen |
|---|---|---|---|---|---|---|---|---|---|
| 1 (Vgl.) | 0,645 | $CaCO_3$ (A) | 2,51 | 15000 | 8800 | 35,5 | 139 | 0,50 | |
| 2 (Vgl.) | 0,634 | $CaCO_3$ (A) | 3,54 | 69 | 1800 | 62,3 | 591 | 0,14 | Umsetzung bei 40°C |
| 3 | 0,620 | $CaCO_3$ (A) | 3,05 | 143 | 34 | 34,9 | 325 | 3,60 | |
| 4 (Vgl.) | 0,551 | $CaCO_3$ (B) | 3,19 | 166 | 38 | 36,2 | 305 | 0,80 | |
| 5 (Vgl.) | 0,512 | $Ca(OH)_2$ (B) | 3,31 | 181 | 180 | 58,8 | 659 | 2,70 | |
| 6 | 0,546 | $Ca(OH)_2$ (A) | 3,01 | 130 | 170 | 29,6 | 314 | 3,20 | |
| 7 | 0,562 | $Ca(OH)_2$ (C) | 3,13 | 97 | 220 | 35,0 | 281 | 3,90 | |
| 8 (Vgl.) | 0,570 | $Ca(OH)_2$ (A) | 3,05 | 2000 | 1300 | 32,5 | 335 | 0,06 | $H_2SiF_6$ mit 18 Gew.-% |
| 9 | 0,572 | $Ca(OH)_2$ (A) | 2,95 | 249 | 180 | 36,2 | 360 | 3,30 | $H_2SiF_6$ mit 9 Gew.-% |
| 10 (Vgl.) | 55 | $CaCO_3$ (B) | 3,22 | 65 | n.b. | n.b. | 280 | <0,1 | Filtertuch setzte sich ständig mit Schmierfilm |
| 11 | 52 | $CaCO_3$ (B) 95% $Ca(OH)_2$ (A) 5% | 3,45 | 130 | n.b. | 39,5 | 341 | >1,3 | |
| 12 | 52 | $CaCO_3$ (B) 95% CaO 5% | 3,48 | 68 | n.b. | 43,5 | 395 | >1,3 | |
| 13 | 56 | $Ca(OH)_2$ (A) | 3,57 | 60 | n.b. | 39,0 | 264 | 1,0 | |
| 14 | 61 | $CaCO_3$ (B) 95% $Ca(OH)_2$ (A) 5% | 3,36 | 65 | n.b. | 40,0 | 275 | 0,9 | $H_2SiF_6$ mit 10 Gew.-% |

Tabelle 2

Analysen der Ca-Chemikalien

| Verbindung | % CaO | % $CO_2$ | Siebanalyse % >8 µm | Siebanalyse % >2 mm | Methode |
|---|---|---|---|---|---|
| $CaCO_3$ (A) | 54,5 | 45,4 | 75,5 | 0 | a |
| $CaCO_3$ (B) | 53,5 | 45,0 | 56,5 | 0 | a |
| $Ca(OH)_2$ (A) | 68,5 | 3,1 | 75,1 | 0 | b |
| $Ca(OH)_2$ (B) | 69,1 | 2,6 | 19,8 | 0 | b |
| $Ca(OH)_2$ (C) | 73,2 | 1,2 | 72,7 | 10,3 | c |
| CaO | 96 | 2,5 | 52,3 | 0 | b |

Maßnahmen für Siebanalysen:
a: «Microtrac Particle Size Analyzer» in Wasser
b: «Microtrac Particle Size Analyzer» in Kerosin
c: Konventionelle Siebanalyse; 1. Wert = % >100 µm

## Patentansprüche

1. Verfahren zur Aufarbeitung von wäßrigen Lösungen von Hexafluorokieselsäure, indem man diese Lösungen mit einer Calciumverbindung vermischt und umsetzt und das Reaktionsprodukt filtriert, dadurch gekennzeichnet, daß man
a) Lösungen einsetzt, die einen Gehalt an $H_2SiF_6$ von 2 bis 15 Gew% aufweisen;
b) als Calciumverbindung $CaCO_3$ oder $Ca(OH)_2$ oder ein Gemisch aus $CaCO_3$ einerseits und CaO oder $Ca(OH)_2$ andererseits mit einem Anteil an CaO oder $Ca(OH)_2$ von mindestens 2 Gew% verwendet, wobei, wenn kein Gemisch eingesetzt wird, mindestens 70 % der Calciumverbindung in einer Korngröße von mehr als 8 µm, doch höchstens 15 % in einer Korngröße von mehr als 2 mm vorliegen;
c) die Mengen der Calciumverbindung so bemißt, daß das Molverhältnis von $Ca^{2+}$ : $SiF_6^{2-}$ zwischen 2,8 und 3,5 liegt;
d) die Umsetzung bei einer Temperatur von mehr als 50°C durchführt und man
e) nach einer Verweilzeit von 0,6 bis 2,5 Stunden das Reaktionsprodukt filtriert.

2. Verfahren nach Anspruch 1, dadurch gekennzeichnet, daß man Lösungen einsetzt, die einen Ge-

halt an $H_2SiF_6$ von 6 - 10 Gew% aufweisen.

3. Verfahren nach Anspruch 1 oder 2, dadurch gekennzeichnet, daß man die Mengen der Calciumverbindung so bemißt, daß das Molverhältnis $Ca^{2+}$ : $SiF_6^{2-}$ 3,0 - 3,45 beträgt.

4. Verfahren nach einem der Ansprüche 1 bis 3, dadurch gekennzeichnet, daß die Umsetzung bei einer Temperatur zwischen 50 und 80°C durchgeführt wird.

**Claims**

1. A process for reprocessing aqueous solutions of hexafluosilicic acid by mixing and reacting these solutions with a calcium compound and filtering the reaction product, which comprises

a) using solutions of an $H_2SiF_6$ content from 2 to 15% by weight,

b) using, as the calcium compound, $CaCO_3$ or $Ca(OH)_2$ or a mixture of $CaCO_3$ on the one hand and CaO or $Ca(OH)_2$ on the other hand with a content of CaO or $Ca(OH)_2$ of at least 2% by weight, at least 70% of the calcium compound, if a mixture is not used, having a grain size of more than 8 µm, but at most 15% having a grain size of more than 2 mm,

c) metering the quantities of the calcium compound in such a way that the $Ca^{2+}/SiF_6^{2-}$molar ratio is between 2.8 and 3.5,

d) carrying out the reaction at a temperaqture of more than 50°C and

e) filtering the reaction product after a residence time from 0.6 to 2.5 hours.

2. The process as claimed in claim 1, wherein solutions are used which have an $H_2SiF_6$ content of 6–10% by weight.

3. The process as claimed in claim 1 or 2, wherein the quantities of the calcium compound are metered in such a way that the $Ca^{2+}/SiF_6^{2-}$ molar ratio is 3.0–3.45.

4. The process as claimed in any of claims 1 to 3, wherein the reaction is carried out at a temperature between 50 and 80°C.

**Revendications**

1. Procédé pour le traitement de solutions aqueuses d'acide fluosilique, dans lequel on mélange ces solutions avec un composé de calcium et on filtre le produit de réaction, caractérisé en ce que

a) on utilise des solutions qui présentent une teneur en $H_2SiF_6$ de 2 à 15% en poids;

b) on utilise comme composé de calcium $CaCO_3$ ou $Ca(OH)_2$ ou un mélange de $CaCO_3$, d'une part et CaO ou $Ca(OH)_2$, d'autre part ayant une proportion de CaO ou $Ca(OH)_2$ d'au moins 2% en poids, et – lorsque l'on n'utilise pas de mélange – au moins 70% du composé de calcium ont une granulométrie de plus de 8 µm, mais 15% au plus ont une granulométrie de plus de 2 mm;

c) on mesure les quantités du composé de calcium de telle sorte que le rapport molaire $Ca^{2+}$:$SiF_6^{2-}$ soit compris entre 2,8 et 3,5;

d) on efectue la réaction après une durée de séjour de 0,5 à 2,5 h.

2. Procédé selon la revendication 1, caractérisé en ce que l'on utilise des solutions ayant une teneur en $H_2SiF_6$ de 6–10% en poids.

3. Procédé selon la revendication 1 ou 2, caractérisé en ce que l'on mesure les quantités du composé de calcium de telle sorte que le rapport molaire $Ca^{2+}$:$SiF_6^{2-}$soit de 3.0–3.45.

4. Procédé selon l'une des revendications 1 à 3, caractérisé en ce que l'on effectue la réaction à une température comprise entre 50 et 80°C.